# EUROPÄISCHE PATENTSCHRIFT

(11) **EP 0 806 378 B1**
(45) Veröffentlichungstag und Bekanntmachung des Hinweises auf die Patenterteilung: **28.06.2000**
(21) Anmeldenummer: 96120127.4
(22) Anmeldetag: 14.12.1996
(51) Int. Cl.: B65G 21/20

(54) **Verstelleinheit, insbesondere in Verpackungsmaschinen**
Position adjusting unit, in particular in packaging machines
Unité de réglage de position, spécialement dans des machines d'emballage

(30) Priorität: 08.05.1996 DE 19618373
(43) Veröffentlichungstag der Anmeldung: 12.11.1997
(73) Patentinhaber: KISTERS MASCHINENBAU GMBH, D-47533 Kleve (DE)
(72) Erfinder:
(74) Vertreter: Röther, Peter, Dipl.-Phys.

(56) Entgegenhaltungen:
- CH-A- 498 760
- DE-U- 8 812 695
- DE-U- 9 210 878

## Beschreibung

Die Erfindung betrifft eine Verstelleinheit, insbesondere in Verpackungsmaschinen, zur stufenlosen Veränderung der Positionierung von Führungsstücken für in parallelen Reihen angeordnete zu verpackende Gegenstände wie Dosen, Flaschen oder dgl. mit einer quer zur Transportrichtung angeordneten Traverse, an der die Führungsstücke verschiebbar gelagert sind, wobei in der Traverse mindestens eine Spindel angeordnet ist, die mit einer axial in der Traverse verschiebbaren Spindelmutter zusammenwirkt, die über eine in einem in der Traverse vorgesehenen Schlitz geführte Paßfeder mit dem Führungsstück verbunden ist.

Derartige Verstelleinheiten werden eingesetzt, um die Maschinen schnell auf andere Produkte bzw. auf Produkte verschiedener Abmessungen umzustellen. An den Führungsstücken können beispielsweise Leitbleche angeordnet sein, die von oberhalb der Transportstrecke zwischen die Produkte reichen und Produktreihen voneinander trennen und in den so gebildeten Reihen führen.

Unterhalb der Transportstrecken angeordnete Verstelleinheiten sind beispielsweise dafür verantwortlich, Transportbänder oder -ketten in ihrem Abstand zueinander zu verstellen.

Die Erfindung geht aus von einer Verstelleinrichtung, bei der in der rohrförmigen Traverse lediglich eine Spindel angeordnet ist, die entweder auf ihrer ganzen Länge mit einem durchgängigen Gewinde versehen ist oder auf einer Hälfte ihrer Länge ein Rechts- und auf der anderen ein Linksgewinde aufweist.

Die Rotation der Spindel wird dabei lediglich auf ein Führungsstück bzw. im zweiten Fall auf zwei Führungsstücke übertragen oder aber, wenn mehrere Führungsstücke über Verbindungsbleche zu einer Führungsstückgruppe zusammengefaßt sind, auf die jeweilige Gruppe.

Im letztgenannten Fall ist die Spindel ebenfalls mit einem Rechts- und einem Linksgewinde ausgebildet. Die Abstände der Führungsstücke einer Gruppe zueinander bleiben beim Verschieben dabei immer konstant. Lediglich die Abstände zwischen Führungsstücken verschiedener Gruppen ändern sich. Auf jeden Fall ist durch die Verschiebung einer Gruppe gleichzeitig auch eine Verschiebung der anderen Gruppe zwangsläufig. Soll nun der Abstand der Führungsstücke zur Einstellung auf Gegenstände kleinerer Abmessungen eingestellt werden, wird die Spindel verdreht, wobei zwar der Abstand zwischen zwei Führungsstücken verkleinert wird, wobei sich allerdings auch der Abstand zwischen den Produktreihen vergrößert. Bei einer derartigen Verstelleinheit ist es somit notwendig, die Produktreihen anschließend zum eigentlichen Verpackungsvorgang wieder zusammenzuführen. Durch die feste Abhängigkeit der Verstellbewegungen der jeweils einander zugeordneten Gruppenmitglieder zueinander sind die Einsatzmöglichkeiten und Variationsmöglichkeiten einer derartigen Vorrichtung stark eingeschränkt.

Es sind daher bereits Vorrichtungen vorgeschlagen worden Siehe DE-U-8 812 695.1, bei denen über eine komplizierte Gestängemechanik (beispielsweise in Form eines Scherengestänges) der Translationsbewegung der Spindelmutter(n) eine weitere Translationsbewegung der mittels des Gestänges bewegten Führungsstücke überlagert ist, wodurch bei Verschiebung eines Führungsstücks um die Distanz a das diesem benachbarte Führungsstück um die Distanz a plus dem durch das Übersetzungsverhältnis gegebenen Verschiebeweg b verschoben wird und das darauffolgende Führungsstück um a plus 2b.

Das hat den Vorteil, daß bei einer derartigen Scherenmechanik mit einem Fixpunkt auf der Mitte der Traverse bei Betätigung der Spindel mit Rechts- und Linksgewinde eine proportionale, auf die veränderten Abmessungen der Produkte bzw. der Transportkettenabstände abgestimmte Verstellung erfolgt.

Der Nachteil liegt hierbei jedoch im komplizierten und störungsanfälligen Aufbau und in der Abhängigkeit von der gegebenen Gewindesteigung der Spindel und der festen Geometrie des Gestänges.

Der Erfindung liegt daher die Aufgabe zugrunde, eine Verstelleinheit der eingangs genannten Art so auszugestalten, daß bei einfacher und kompakter Bauart ebenfalls eine proportionale Verstellung möglich ist, hierbei jedoch bei geringerem Montageaufwand eine größere Variationsbreite bei der Verstellung gegeben ist.

Die Erfindung löst diese Aufgabe gemäß Anspruch 1 dadurch, daß in der Traverse mindestens zwei Spindeln parallel zueinander angeordnet sind und die jeweils einer Spindel zugeordnete(n) Spindelmutter(n) eine mit der entsprechenden Spindel zusammenwirkende Gewindebohrung und mindestens eine weitere Durchgangsbohrung aufweist, durch die die benachbarte(n) Spindel(n) frei hindurchgeführt ist/sind und die Spindelbewegungen voneinander entkoppelbar sind.

Je nach Einsatzzweck können bis zu vier Spindeln in der Traverse angeordnet sein. Bei der Ausführung der Spindeln mit durchgängigem Getriebe ist jeder Spindel eine Spindelmutter zugeordnet, die zylinderförmig ausgebildet ist, und in ihrem Durchmesser mit dem Innendurchmesser der Traverse korrespondiert, wodurch eine gute verkantungsfreie Führung im Rohr gewährleistet ist. Die benachbarten, nicht mit dieser Spindelmutter zusammenwirkenden Spindeln sind durch entsprechende Bohrungen bzw. Ausnehmungen frei hindurchgeführt.

Durch die Entkoppelbarkeit der in der Traverse angeordneten Spindeln sind bei der Verstellung der ihnen zugeordneten Führungsstücke breite Variationsmöglichkeiten gegeben, die durch die Merkmale der Unteransprüche verdeutlicht werden.

Gemäß Anspruch 2 kann jede Spindel mit einem eigenen Antrieb ausgerüstet sein, so daß jedes Führungsstück individuell verstellt werden kann.

Denkbar ist auch eine Ausführungsform, wie sie der Anspruch 3 vorschlägt, daß nämlich ein gemeinsamer Antrieb vorgesehen ist und zwischen diesem Antrieb und den Spindeln Getriebe in Form von Zahnrädern angeordnet sind.

Durch die Zuschaltbarkeit dieser Getriebe besteht die Möglichkeit, daß sowohl alle Spindeln gleichzeitig betätigt werden können, aber auch nur einzelne ausgewählte. Somit ist es möglich, nach der endgültigen Positionierung einzelner Führungsstücke durch Ausrasten der ihnen zugeordneten Zahnräder andere Führungsstücke weiter zu verstellen.

Wenn in den Getrieben Zahnräder verschiedener Zahnzahl vorgesehen sind, besteht erfindungsgemäß weiterhin die Möglichkeit, die Übersetzungsverhältnisse zwischen Antrieb und Spindeln im Getriebe zu variieren, so daß bei konstantem Antrieb einzelne Führungsstücke über eine kürzere, andere dagegen um eine längere Distanz - und zwar in einem vorwählbaren Verhältnis zueinander - verschoben werden können.

Eine ähnliche Möglichkeit ergibt sich gemäß Anspruch 5 dadurch, daß die Gewindesteigungen der einzelnen Spindeln unterschiedlich sind.

Werden die Merkmale der Ansprüche 4 und 5 miteinander kombiniert, ergeben sich weitere Variationsmöglichkeiten.

Wie an sich bereits bekannt, können gemäß Anspruch 6 die Spindeln bzw. einzelne Spindeln auf der einen Hälfte ihrer Länge ein Rechts- und auf der anderen Hälfte ein Linksgewinde aufweisen. Hierdurch können die Abstände zwischen zwei Führungsstükken, die mit der gleichen Spindel verbunden sind, beeinflußt werden.

Derartige Spindeln können gemäß Anspruch 7 auch zweiteilig ausgebildet sein, wobei beide Teile der Spindeln miteinander gekuppelt werden können. Hierdurch können Toleranz- und Montagefehler ausgeglichen werden.

Durch Kombination einzelner oder aller vorgenannten Merkmale der Erfindung sind somit den Variationsmöglichkeiten kaum Grenzen gesetzt.

Da die Transportstrecken in den in Rede stehenden Verpackungsmaschinen relativ lang sind, muß die Verstellung der Führungsstücke naturgemäß über die gesamte Länge wirken. Obwohl es möglich ist, an verschiedenen Stellen erfindungsgemäße Verstelleinheiten vorzusehen, ist es jedoch sinnvoller, gemäß Anspruch 8 die Bewegung der Spindeln einer Verstelleinheit über Transmissionen auf in Transportrichtung vor- bzw. nachgeordnete Verstelleinheiten zu übertragen.

Eine besonders einfache und zuverlässige Lösung ist durch das Merkmal des Anspruchs 9 gegeben. Es wird vorgeschlagen, die Transmission als Welle auszugestalten, die über Kegelritzel mit den entsprechenden Spindeln verbunden ist.

Da die Verstellung der Führungsstücke in der Regel symmetrisch zu einer Mittellängsachse erfolgen muß, ist gemäß Anspruch 10 vorgesehen, daß bei ungerader Anzahl der Führungsstücke auf einer Traverse das mittlere Führungsstück unverschiebbar angeordnet ist, so daß sich bei Betätigung der Spindeln die links und rechts von diesem festen Führungsstück benachbarten Führungsstücke wie gewünscht einstellen.

Die Erfindung wird im folgenden anhand von Zeichnungen dargestellt und näher erläutert.

Es zeigen:
- Fig. 1:: in Seitenansicht eine mit zwei Spindeln besetzte Traverse,

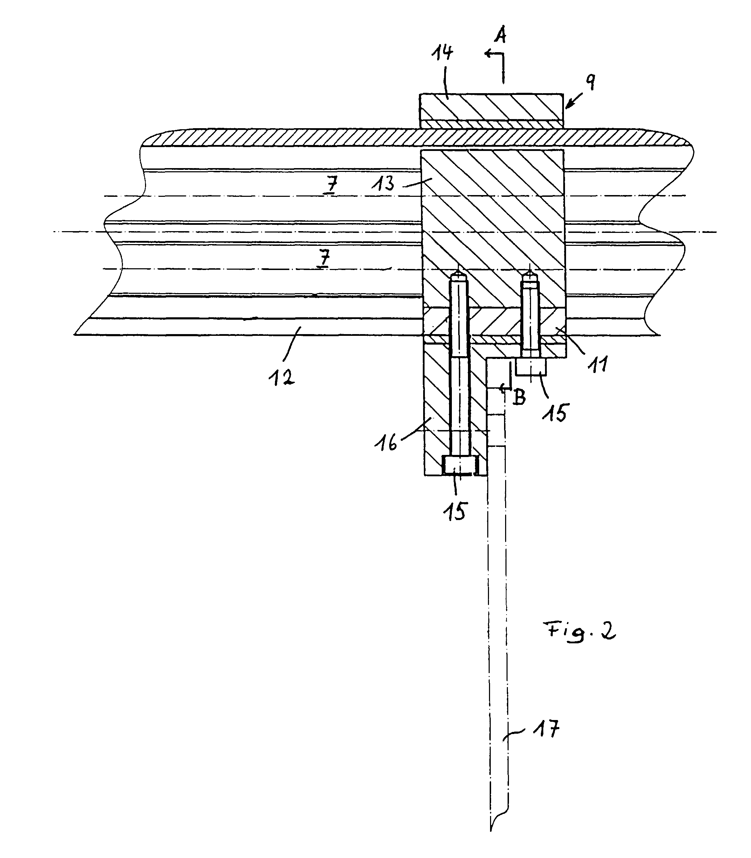

- Fig. 2:: einen Ausschnitt aus Fig. 1 im Querschnitt,
- Fig. 3:: einen Schnitt entlang der Linie A-B aus Fig. 2,
- Fig. 4:: im Detail Vorrichtung zur Übertragung der Drehbewegung der Spindel auf eine Transmission.

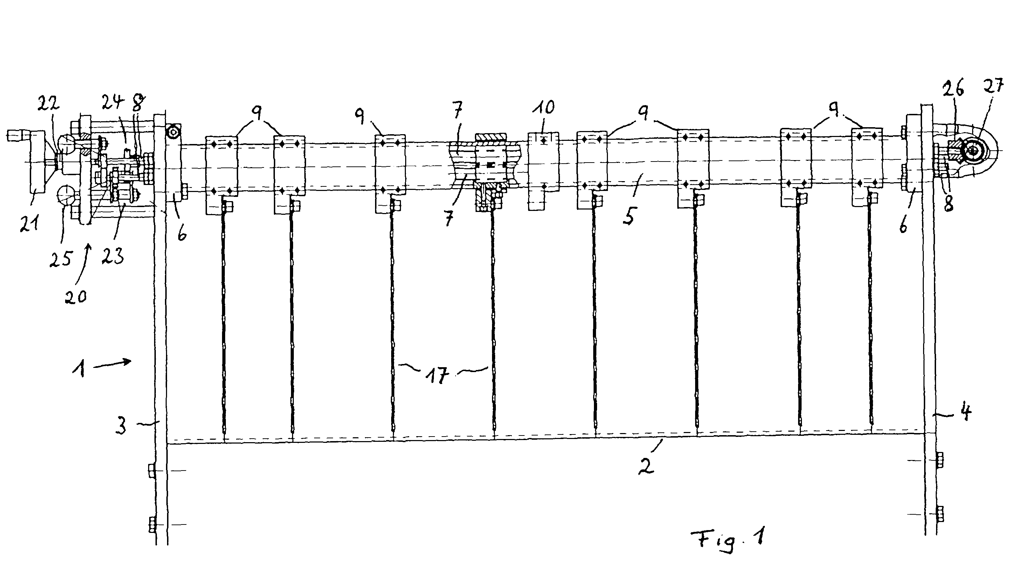

In der Fig. 1 ist eine Verstelleinheit in einer Verpackungsmaschine dargestellt und allgemein mit dem Bezugszeichen 1 versehen.

Im vorliegenden Ausführungsbeispiel ist die Verstelleinheit 1 portalartige über die lediglich angedeutete Transportstrecke 2 gebaut. Links und rechts von der Transportstrecke 2 ist je ein Träger 3 und 4 an den Maschinenrahmen angeschraubt, zwischen denen eine rohrförmige Traverse 5 in Klemmstücken 6 befestigt ist.

In der Traverse 5 sind im vorliegenden Beispiel vier Spindeln 7 parallel zueinander angeordnet, deren Enden 8 durch die Träger 3 und 4 hindurchgeführt sind.

Auf der Traverse 5 verschiebbar gelagert sind acht Führungsstücke 9 und ein weiteres 10 auf der Mitte der Traverse 5, welches dort fixiert ist.

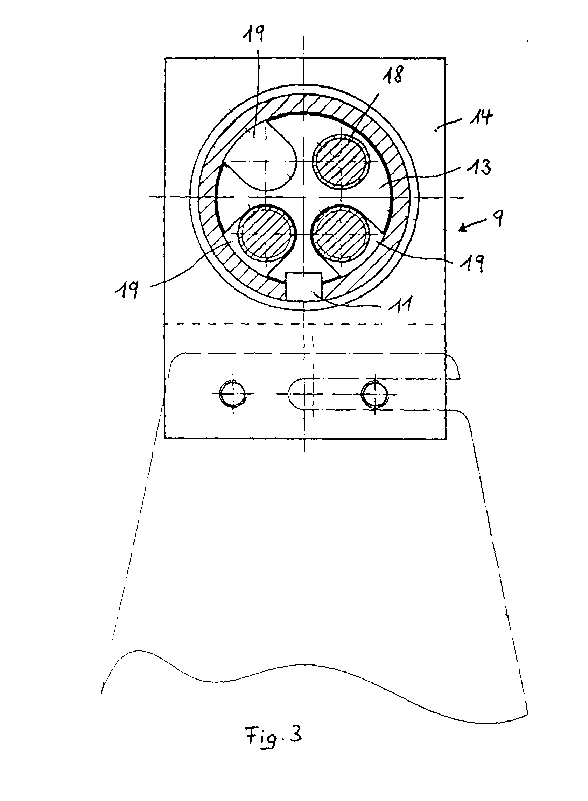

Wie deutlicher aus der Fig. 3 hervorgeht, ist jedes Führungsstück über eine Paßfeder 11, die in einer Schlitzführung 12 in der Traverse 5 geführt ist, mit einer Spindelmutter 13 innerhalb der Traverse 5 verbunden. An dem die Traverse 5 umschließenden Rahmen 14 des Führungsstücks 9 ist mittels Schrauben 15, die den Rahmen 14 mit der Paßfeder 11 und der Spindelmutter 13 verbinden, eine Lasche 16 befestigt, an der wiederum ein Leitblech 17 angeschraubt ist.

Die Paßfeder 11 steckt in einer Nut am Umfang der Spindelmutter 13, die zylinderförmig ausgebildet ist und im vorliegenden Fall eine Gewindebohrung 18 für die mit ihr zusammenwirkende Spindel 7 sowie drei weitere Ausnehmungen 19 aufweist, durch die die restlichen drei Spindeln 7 frei hindurchgeführt sind (aus Übersichtlichkeitsgründen sind lediglich zwei weitere Spindeln dargestellt).

Dem Führungsstück 10 in der Mitte der Traverse 5 ist keine Spindelmutter zugeordnet.

Am linken Träger 3 ist der allgemein mit 20 bezeichnete Antrieb für die Spindeln 7 angeordnet. Es handelt sich um ein Handrad 21, mit dem eine Welle 22 verdrehbar ist, die als Antriebswelle ausgebildet ist, die auf ein Getriebe 23 führt, dessen Abtriebswellen zur Verdrehung der Spindeln 7 dienen.

Das Getriebe 20 besteht aus miteinander kämmenden Zahnrädern 24, die mit gleichem oder unterschiedlichem Übersetzungsverhältnis die Drehbewegung der Welle 22 auf die einzelnen Spindeln 7 übertragen. Zur Ab- bzw. Zukopplung einzelner Spindeln 7 sind die Zahnräder 24 mit Hilfe von Schubhebeln 25 in bzw. auß0r Wirkverbindung mit den Spindeln 7 zu verschieben. Somit können entweder alle Spindeln 7 gleichzeitig verdreht werden oder einzelne werden vom Antrieb 20 abgekoppelt.

Im Beispiel gemäß Fig. 1 sind die Spindeln 7 auf einer Hälfte ihrer Länge mit einem Rechts- und auf der anderen Hälfte mit einem Linksgewinde versehen. Jeder Spindel 7 sind dann zwei Spindelmuttern 11 zugeordnet, durch die jeweils ein Führungsstück 9 verstellt werden kann. Die Führungsstücke 9 sind somit jeweils paarweise symmetrisch zum Führungsstück 10 miteinander gekoppelt.

Durch geeignete Wahl der Gewindesteigungen der einzelnen Spindeln 7 bzw. der Übersetzungsverhältnisse im Getriebe 20 ist die Positionierung der jeweiligen Führungsstücke 9 bzw. jedes Paares von Führungsstücken 9 mit großer Variationsbreite möglich.

Die Drehbewegung der Spindel(n) 7 wird mit Hilfe eines Kegelritzelgetriebes 26 auf eine Transmissionswelle 27, die rechtwinklig von der Verstelleinheit 1 abgeht, übertragen. Die Transmissionswelle 27 führt zu einer benachbarten Verstelleinheit 1, wo die Drehbewegung der Welle 27 ebenfalls über ein Kegelritzelgetriebe auf die dort befindlichen Spindeln übertragen wird.

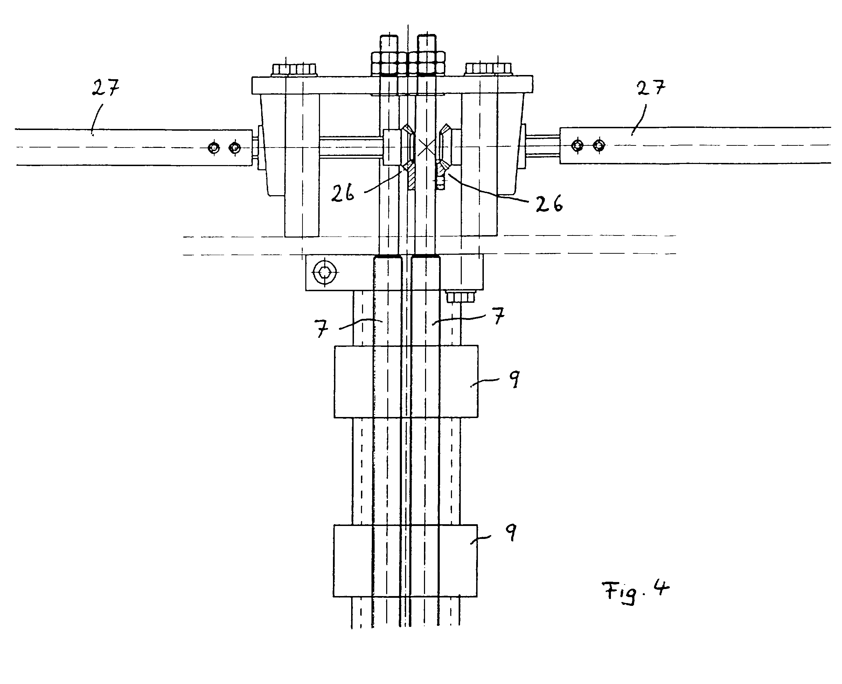

Wie in Fig. 4 dargestellt, kann die Drehbewegung der Spindel 7 einer Verstelleinheit 1 über zwei gleiche Kegelritzelgetriebe 26 auf zwei Transmissionswellen 27 übertragen werden, die zum Antrieb der Spindeln 7 in vor und hinter der Verstelleinheit 1 angeordneten weiteren Verstelleinheiten dienen.

Neben beispielsweise Trapezgewindespindeln oder Kugelrollspindeln kann jede geeignete Spindelart eingesetzt werden. Zur besseren Führung der Führungsstücke 9 dienen geeignete Lager. Im manchen Fällen reicht jedoch auch eine einfache Schmierung.

## Patentansprüche

1. Verstelleinheit, insbesondere in Verpackungsmaschinen zur stufenlosen Veränderung der Positionierung von Führungsstücken für in parallelen Reihen angeordnete zu verpackende Gegenstände wie Dosen, Flaschen oder dgl. mit einer quer zur Transportrichtung angeordneten Traverse, an der die Führungsstücke verschiebbar gelagert sind, wobei in der Traverse mindestens eine Spindel angeordnet ist, die mit einer axial in der Traverse verschiebbaren Spindelmutter zusammenwirkt, die über eine in einem in der Traverse vorgesehenen Schlitz geführte Paßfeder mit dem Führungsstück verbunden ist,
dadurch gekennzeichnet,
daß in der Traverse (5) mindestens zwei Spindeln (7) parallel zueinander angeordnet sind und die jeweils einer Spindel (7) zugeordnete(n) Spindelmutter(n) (13) eine mit der entsprechenden Spindel (7) zusammenwirkende Gewindebohrung (18) und mindestens eine weitere Durchgangsbohrung (19) aufweist, durch die die benachbarte(n) Spindel(n) (7) frei hindurchgeführt ist/sind und die Spindelbewegungen voneinander entkoppelbar sind.

2. Verstelleinheit nach Anspruch 1,
dadurch gekennzeichnet,
daß jeder Spindel (7) ein eigener Antrieb (20) zugeordnet ist.

3. Verstelleinheit nach Anspruch 1,
dadurch gekennzeichnet,
daß den Spindeln (7) ein gemeinsamer Antrieb (20) mit zwischenschaltbaren Getrieben (23,24) zugeordnet ist.

4. Verstelleinheit nach Anspruch 3,
dadurch gekennzeichnet,
daß das Übersetzungsverhältnis zwischen Antrieb (20) und Spindeln (7) einstellbar ist.

5. Verstelleinheit nach einem der Ansprüche 1 bis 4,
dadurch gekennzeichnet,
daß die Spindeln (7) mit Gewinden unterschiedlicher Steigung versehen sind.

6. Verstelleinheit nach einem der Ansprüche 1 bis 5,
dadurch gekennzeichnet,
daß die Spindeln (7) auf der einen Hälfte ihrer Länge ein Rechts- und auf der anderen Hälfte ein Linksgewinde aufweisen.

7. Verstelleinheit nach einem der Ansprüche 1 bis 6,
dadurch gekennzeichnet,
daß die Spindeln (7) aus zwei hintereinander angeordneten Teilspindeln bestehen, die miteinander kuppelbar sind.

8. Verstelleinheit nach einem der Ansprüche 1 bis 7,
dadurch gekennzeichnet,
daß die Bewegung der Spindeln (7) über Transmissionen (27) auf in Transportrichtung vor- bzw. nachgeordnete Verstelleinheiten (1) übertragbar ist.

9. Verstelleinheit nach Anspruch 8,
dadurch gekennzeichnet,
daß die Transmission eine Welle (27) ist, die über Kegelritzel (26) mit den entsprechenden Spindeln (7) verbunden ist.

10. Verstelleinheit nach einem der Ansprüche 1 bis 9,
dadurch gekennzeichnet,
daß bei ungerader Anzahl der Führungsstücke (9) das mittlere Führungsstück (10 unverschiebbar auf der Traverse (5) angeordnet ist.

## Claims

1. Adjusting unit, particularly in packaging machines, for smooth changing of the position of guide pieces for articles to be packaged, such as cans, bottles or the like, which are disposed in parallel rows, with a crosspiece disposed transversely with respect to the transport direction on which the guide pieces are movably mounted, wherein at least one spindle is disposed in the crosspiece, this spindle co-operating with a spindle nut which is axially movable in the crosspiece and is connected to the guide piece by way of an adjusting spring which is guided in a slot provided in the crosspiece, characterised in that at least two spindles (7) are disposed parallel to one another in the crosspiece (5) and the spindle nut(s) (13) associated with each spindle (7) has/have a threaded bore (18) co-operating with the corresponding spindle (7) and at least one further through bore (19) through which the adjacent spindle(s) (7) is/are passed freely and the spindle movements can be decoupled from one another.

2. Adjusting unit according to Claim 1, characterised in that each spindle (7) has its own drive (20) associated with it.

3. Adjusting unit according to Claim 1, characterised in that a common drive (20) with interposable gears (23, 24) is associated with the spindles (7).

4. Adjusting unit according to Claim 3, characterised in that the transmission ratio between the drive (20) and the spindles (7) is adjustable.

5. Adjusting unit according to one of Claims 1 to 4, characterised in that the spindles (7) are provided with threads of differing pitch.

6. Adjusting unit according to one of Claims 1 to 5, characterised in that the spindles (7) have a right-hand thread on one half of their length and a left-hand thread on the other half.

7. Adjusting unit according to one of Claims 1 to 6, characterised in that the spindles (7) consist of two part-spindles which are disposed one behind the other and can be coupled to one another.

8. Adjusting unit according to one of Claims 1 to 7, characterised in that the movement of the spindles (7) can be transferred by way of transmissions (27) to adjusting units (1) disposed upstream or downstream in the transport direction.

9. Adjusting unit according to Claim 8, characterised in that the transmission is a shaft (27) which is connected by way of bevel gear pinions (26) to the corresponding spindles (7).

10. Adjusting unit according to one of Claims 1 to 9, characterised in that in the case of an uneven number of guide pieces (9) the middle guide piece (10) is immovably disposed on the crosspiece (5).

## Revendications

1. Unité de réglage, en particulier dans des machines d'emballage, pour faire varier progressivement le positionnement de pièces pour le guidage d'objets à emballer, tels que boîtes, bouteilles et analogue, disposés en rangées parallèles, comprenant une traverse qui est disposée transversalement à la direction de transport et sur laquelle les pièces de guidage sont montées coulissantes, dans la traverse étant disposée au moins une broche qui coopère avec un écrou de broche, lequel peut coulisser axialement dans la traverse et est relié à la pièce de guidage par une clavette guidée dans une fente ménagée dans la traverse, caractérisée en ce qu'au moins deux broches (7) sont disposées parallèlement l'une à l'autre dans la traverse (5), et le(s) écrou(s) de broche (13) associé (s) à chaque broche (7) comporte(nt) un taraudage (18) coopérant avec la broche (7) correspondante et au moins un autre trou traversant (19) à travers lequel la (les) broche(s) (7) passe(nt) librement et par l'intermédiaire duquel les mouvements des broches peuvent être dissociés l'un de l'autre.

2. Unité de réglage selon la revendication 1, caractérisée en ce qu'un moyen d'entraînement individuel (20) est associé à chaque broche (7).

3. Unité de réglage selon la revendication 1, caractérisée en ce qu'un moyen d'entraînement commun (20) à mécanismes interposables (23, 24) est associé aux broches (7).

4. Unité de réglage selon la revendication 3, caractérisée en ce que le rapport de transmission entre le moyen d'entraînement (20) et les broches (7) est réglable.

5. Unité de réglage selon l'une des revendications 1 à 4, caractérisée en ce que les broches (7) sont pourvues de filetages à pas différents.

6. Unité de réglage selon l'une des revendications 1 à 5, caractérisée en ce que les broches (7) comportent, sur l'une des moitiés de leur longueur, un filet à droite et, sur l'autre moitié, un filet à gauche.

7. Unité de réglage selon l'une des revendications 1 à 6, caractérisée en ce que les broches (7) sont constituées de deux broches partielles qui sont disposées l'une derrière l'autre et qui peuvent être accouplées l'une à l'autre.

8. Unité de réglage selon l'une des revendications 1 à 7, caractérisée en ce que le mouvement des broches (7) peut être communiqué par des moyens de transmission (27) à des unités de réglage (1) implantées en amont ou, respectivement, en aval par rapport à la direction de transport.

9. Unité de réglage selon la revendication 8, caractérisée en ce que le moyen de transmission est un arbre (27) qui est relié aux broches correspondantes (7) par des pignons coniques (26).

10. Unité de réglage selon l'une des revendications 1 à 9, caractérisée en ce que, en présence de pièces de guidage (9) en nombre impair, la pièce de guidage centrale (10) est montée sans possibilité de déplacement sur la traverse (5).
